# EUROPEAN PATENT APPLICATION

(11) **EP 4 470 432 A1**
(43) Date of publication of application: **04.12.2024**
(21) Application number: 24178665.6
(22) Date of filing: 29.05.2024
(51) Int. Cl.: A47J 43/07

(54) **WIRE ROUTING APPARATUS IN BLENDER SYSTEMS**

(30) Priority: 30.05.2023 US 202363504906 P
(71) Applicant: Vita-Mix Management Corporation, Olmsted Township, OH 44138 (US)
(72) Inventor: KRISE, Brandon Philip, Middleburg Heights, OH 44130 (US); ULMENSTINE, Jacob George, Olmsted Township, OH 44138 (US)
(74) Representative: Budde Schou A/S

(57) **Abstract**

A blender system is disclosed having a blender base including housing walls defining an interior cavity. The blender system further includes a routing post disposed within the interior cavity of the blender base. The routing post serves to direct a wire along a predetermined path within the blender base.

## Description

### CROSS-REFERENCE TO RELATED APPLICATION

The present application claims priority to and the benefit of U.S. Provisional Application No. 63/504,906, entitled WIRE ROUTING APPARATUS IN BLENDING SYSTEMS, and filed on May 30, 2023, the entire contents of which are hereby incorporated by reference.

### TECHNICAL FIELD

The present specification generally relates to blender systems and, more specifically, to components within a base of a blender system.

### BACKGROUND

Blender systems are often used to blend and process foodstuffs. Conventional blenders generally include a blender base with a motor therein. In order to operate the motor in an appropriate fashion, various components, such as circuit boards or the like may be utilized. The circuit boards may be communicatively and/or electrically coupled to various other components within the base, such as via wires or the like. The wires may be particularly positioned during assembly of the base to avoid getting in the way of other components during the assembly process and/or to avoid damage (e.g., damage due to pinched wires).

### SUMMARY

In at least one instance, a blender system is disclosed having a blender base including housing walls defining an interior cavity. The blender system further includes a routing post disposed within the interior cavity of the blender base. The routing post serves to direct a wire along a predetermined path within the blender base.

In at least one instance, a blender system is disclosed. The blender system includes a blender base including housing walls, wherein the housing walls define an interior cavity. The blender system further includes a motor housing, a motor positioned within the motor housing, wherein the motor produces a vibration during use, and a routing post extending from the motor housing into the interior cavity of the blender base. The routing post is to direct a wire along a predetermined path within the blender base, wherein the routing post prevents the wire from moving out of the predetermined path.

In at least one instance, a blender system is disclosed. The blender system includes a blender base comprising housing walls, wherein the housing walls define an interior cavity, a motor housing, a motor positioned within the motor housing, wherein the motor produces a vibration during use, and a routing post extending from one of the housing walls into the interior cavity of the blender base. The routing post is to direct a wire along a predetermined path within the blender base, wherein the routing post prevents the wire from moving out of the predetermined path.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 depicts a front view of an illustrative blender system according to one or more aspects described herein;
FIG. 2 depicts a cutaway view of an illustrative blender base according to one or more aspects shown and described herein;
FIG. 3 depicts a first side perspective view of various illustrative interior components within an interior of a blender base according to one or more aspects described herein;
FIG. 4 depicts a second side perspective view of various illustrative interior components within an interior of a blender base according to one or more aspects described herein;
FIG. 5 depicts a front perspective view of various illustrative interior components within an interior of a blender base according to one or more aspects described herein;
FIG. 6A depicts a partial view of an inner surface of a top plate of a blender base according to one or more aspects shown and described herein;
FIG. 6B depicts another partial view of an inner surface of a top plate of a blender base according to one or more aspects shown and described herein;
FIG. 6C depicts yet another partial view of an inner surface of a top plate of a blender base according to one or more aspects shown and described herein;
FIG. 7 depicts a top perspective view of an illustrative blender base with a board housing removed according to one or more aspects shown and described herein; and
FIG. 8 depicts a top view of an illustrative blender base and a bottom view of a board housing according to one or more aspects shown and described herein.

### DETAILED DESCRIPTION

The present disclosure relates to various wire routing components disposed within a blender base of a blender assembly. The wire routing components are generally positioned to route wires extending between one or more control boards and various other components of the blender base, including, but not limited to, a power source, a user interface device, a motor, a sensor, and/or the like. Each of the wire routing components described herein are generally shaped, sized, and positioned to route a particular wire of a particular gauge from a particular first location to a particular second location. In some embodiments, the wire routing components described herein may be attached to or integrally formed with various other components of the blender base. When the wires are held by the wire routing components described herein, the components of the blender base can be assembled, disassembled, used, and/or the like while avoiding having the wires become dislodged from connection points, pinched, caught in other components, hindering other components, and/or the like. As such, the use of the components shown and described herein improves the reparability of the blender base.

It should be appreciated that while the various embodiments and aspects described herein relate particularly to blender systems, the present disclosure is not limited to such. That is, the various components, systems, and methods described herein can be implemented in other manners, such as in other devices or systems that utilize wires interconnecting various components, particularly devices or systems where space between components may be limited.

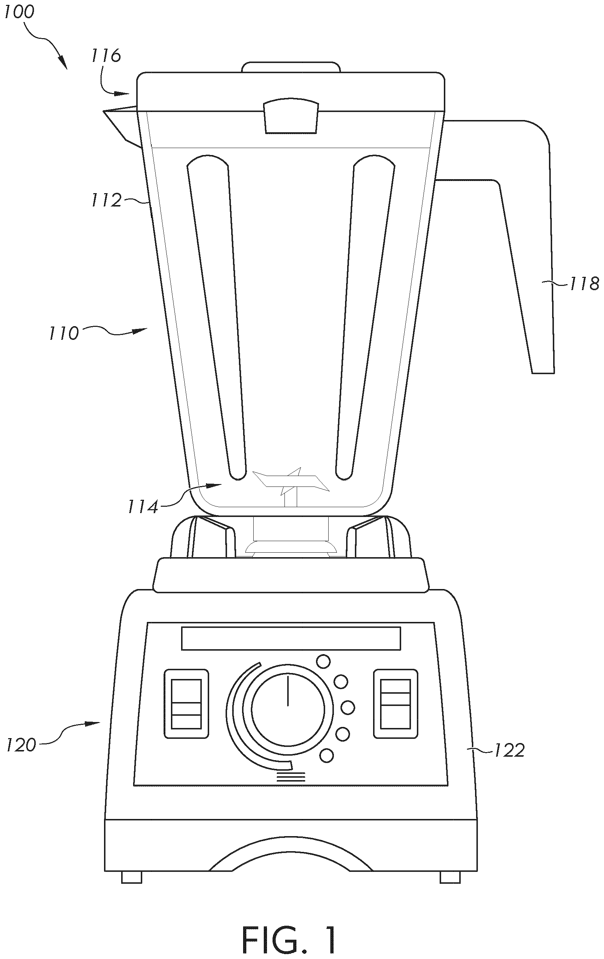

FIG. 1 generally depicts an illustrative blender system 100 according to various embodiments. The blender system 100 depicted in FIG. 1 may incorporate one or more wire routing components, as described in greater detail herein. The blender system 100 depicted in FIG. 1 is provided for context only, and the wire routing components described herein are not limited to this implementation. For example, blender system 100 may include a large format container, or other blending container as described herein. In addition, the blender system 100 may allow for interchangeable containers.

As shown in FIG. 1, the blender system 100 includes a blender base 120 and a container 110 operatively attachable to the blender base 120. The container 110 includes walls 112 that define an interior cavity containing a blade assembly 114. In addition, the blender system 100 includes a lid 116 that may be operatively attached to the container 110 to enclose the interior cavity defined by the walls 112. The container 110 may further include a handle 118. Contents, including foodstuff and non-foodstuff, may be added to the interior cavity of the container 110 for blending. The container 110 may be formed from one or more materials such as, but not limited to, plastics, glass, metals, and/or the like. In another aspect, the container 110 may be powered in any appropriate manner, such as by components within the blender base 120, as described herein.

In some embodiments, the blade assembly 114 is removably couplable to the container 110. In addition, the container 110 may be removably couplable to the blender base 120. The blade assembly 114 may be rotated, moved, or the like by an external source, such as a motor or the like, such as a motor housed within the blender base 120.

While the container 110 depicted in FIG. 1 is shown as a large-format system, the container 110 may be a single serving style container, such as for example, of a type where the container 110 is filled, a blender base containing the blade assembly 114 is attached to the container, and the container 110 is inverted and placed on the blender base 120 for blending. As can be appreciated, the container 110 depicted in FIG. 1 is only one illustrative shape, and the container 110 may be a different size and/or shape without departing from the scope of the present disclosure.

Referring to FIGS. 1-2, the blender base 120 includes a motor 130 disposed within a base housing 122. The motor 130 selectively drives the blade assembly 114 when the motor 130 is switched into an "on" configuration and the blade assembly 114 is interfaced with the blender base 120. As a result, the blade assembly 114 may rotate, agitate, impart heat, or otherwise interact with contents within the interior cavity of the container 110. In some aspects, operation of the blender system 100 may impart heat into the contents stored within the interior cavity of the container 110, such as through a magnet and an exciter that operatively induces heat through rotation of the magnet relative the exciter.

In some embodiments, the blender system 100 may identify or detect whether components of the blender system 100 are interlocked with one another through mechanical detection (e.g., push rods), user input, image recognition, magnetic detection (e.g., reed switches), electronic detection (e.g., inductive coils, a near field communication (NFC) component), or the like.

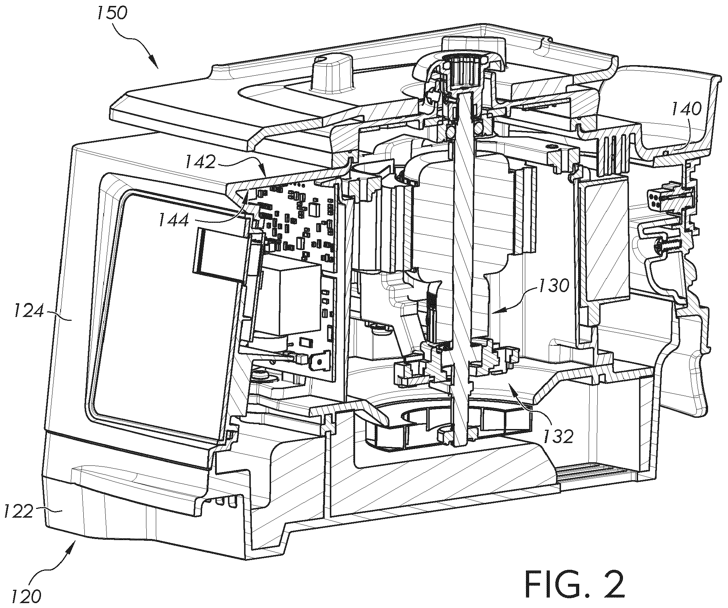

Turning to FIG. 2, various interior components of the blender base 120 are depicted. More specifically, the blender base 120 may include the base housing 122, which includes one or more housing walls 124 that define an interior cavity of the blender base 120. Within the interior cavity of the blender base 120, the motor 130 is disposed, or otherwise positioned, within a motor housing 132. At least a portion of the motor 130 is exposed through a top plate 140 of the base housing 122, particularly through an aperture 146 defined in the top plate 140. The top plate 140 includes an outer surface 142 opposite an inner surface 144. The outer surface 142 faces the container 110 while the inner surface 144 faces away from the container 110. The outer surface 142 supports a board housing 150 thereon.

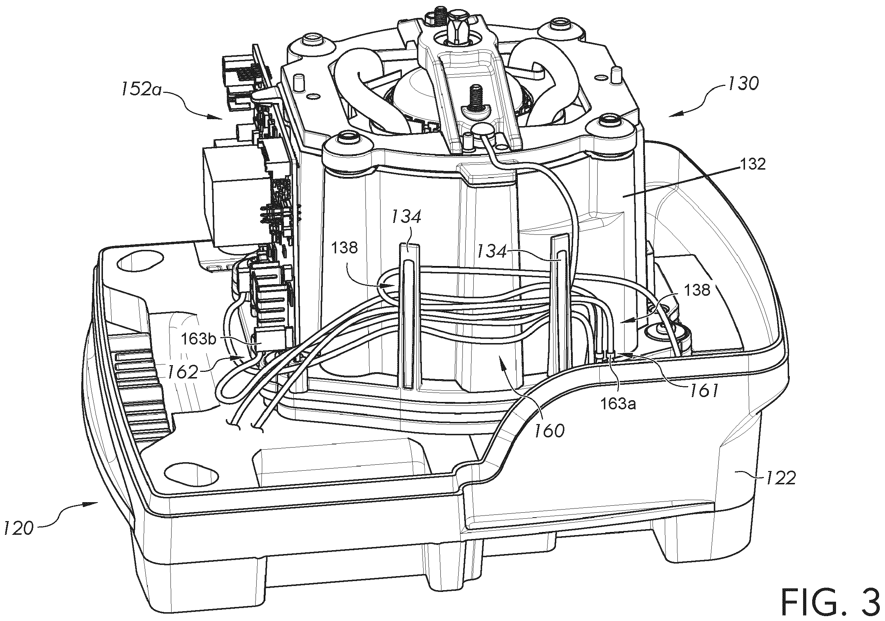

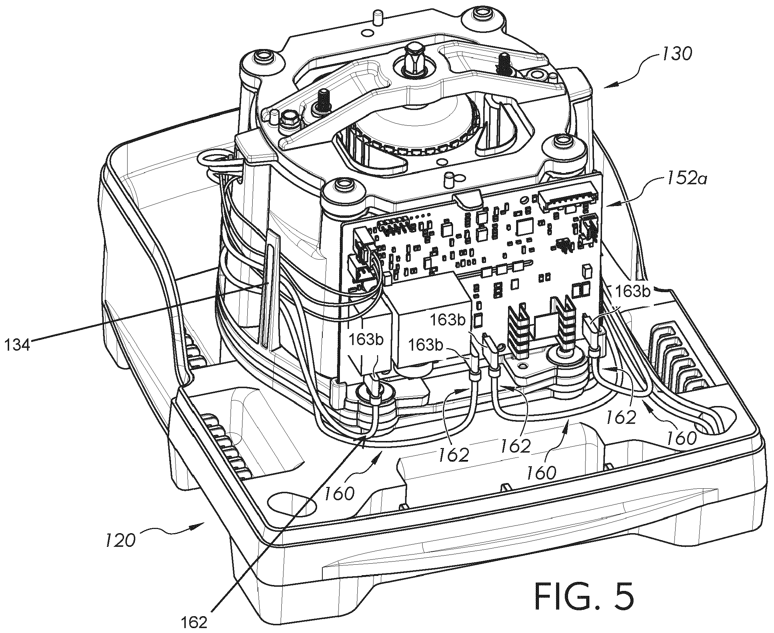

As shown in FIGS. 3-5, various interior components within the blender base 120 are depicted. More specifically, FIG. 3-5 depict the motor housing 132 surrounding the motor 130 and including one or more routing posts 134. The one or more routing posts 134 can serve to, for example, route one or more wires and/or cords between particular components of the blender system 100. Stated another way, the one or more routing posts 134 can be used to hold and/or otherwise secure one or more wires and/or cords in a desirable position that minimizes the one or more wires and/or cords from becoming damaged and/or from interfering with assembly of another component, for example. In addition, the one or more routing posts 134 may serve to secure the wires and/or cords during operation of the blender base 120, which, due to vibrations produced by the motor 130, may otherwise cause the wires and/or cords to become dislodged. The one or more routing posts 134 can serve to direct, or otherwise guide, the one or more wires along a predetermined path. The one or more routing posts 134 are generally projections or the like that extend from a surface (e.g., a surface of the motor housing 132) and define a space 138 (e.g., a space between the motor housing 132 and the routing posts 134). The space 138 is generally shaped and sized to receive one or more wires 160 and secure the one or more wires 160 in place. Stated another way, the one or more wires 160 can form an interference fit within the space 138 between the routing post 134 and an adjacent component, such as the motor housing 132, for example.

A first control board 152a may be communicatively and/or electrically coupled to various other components of the blender system 100 (FIG. 1) via the wires 160. More specifically, for example, a first end 161 of the wire 160 is coupled via a first connector 163a to a particular component and a second end 162 of the wire 160 is coupled via a second connector 163b to the first control board 152a. The wire 160 has a length that is greater than the distance between the position of the first connector 163a and the second connector 163b. As such, slack, or additional wire 160 is present even after the wire 160 is appropriately coupled between the particular components. Such slack, or excess, wire 160 between the first end 161 and the second end 162 thereof may be restrained in a particular location and/or orientation using the one or more routing posts 134. As noted herein, this slack, or excess, wire 160 is secured by the one or more routing posts 134 during various phases of use or operation of the blender base 120, including, but not limited to, operation of the motor 130, assembly of the blender base 120, repairing the blender base 120, and/or disassembling/reassembling of the blender base 120.

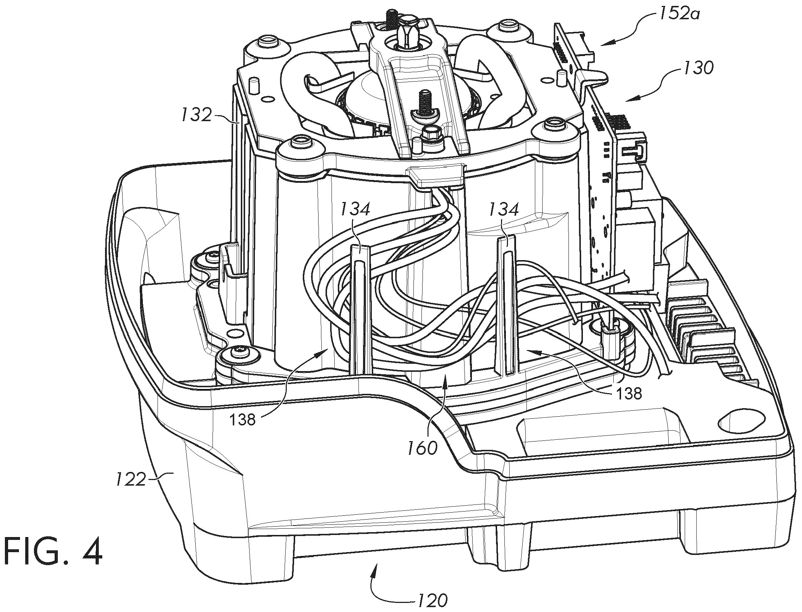

The one or more routing posts 134 that are particularly depicted in FIGS. 3 and 4 define a space 138 between each of the one or more routing posts 134 and an adjacent surface of the blender system 100, such as the motor housing 132, for example. The defined spaces 138 are generally open on one end so that a user can place the wires 160 within the space 138 and closed on an opposing end so that the wires 160 are bound, or otherwise secured, in a particular position, but this is only one illustrative example. That is, other embodiments whereby the one or more routing posts 134 restrain the wires 160 in another fashion are contemplated and included within the scope of the present disclosure. In at least some embodiments, the routing posts 134 may define one or more of a hook shape, a tab shape, a "U" shape, a "C" shape, or an "O", or annular, shape. In instances where the routing posts 134 define an "O", or annular, shape, the wires 160 may be fed, or otherwise directed, through the routing post 134 prior to coupling at least one of the first end 161 or the second end 162 to its associated connector 163a, 163b, for example. The wires 160 may be positioned within such shape to reduce movement of wires 160 (e.g., during operation of the motor 130, which causes vibrations), increase manufacturability (e.g., to ensure the wires 160 are not in the way of other components during assembly), and/or the like.

Embodiments may include other constructions. For example, the routing posts 134 may be in the form of a clip, a strap, and/or a two-piece component that, when joined together, forms a loop around the wires 160. Such routing posts 134 are movable between an open position to receive or release the wires 160 to a closed position to form a loop and secure the wires 160 therein. According to another example, the one or more routing posts 134 may include elastomeric materials such that the one or more routing posts 134 are biased in a position which applies pressure or friction to the wires 160 disposed within the space to secure the wires 160 in position.

While FIGS. 3 and 4 depict the one or more routing posts 134 as being a part that is integrally formed with other components of the blender system 100 such as the motor housing 132, the present disclosure is not limited to such. That is, the one or more routing posts 134 may be separably affixed or removably attached to a component such as the motor housing 132 in some embodiments. In such instances, the one or more routing posts 134 can be selectively positioned in various locations within the blender system 100 as a need arises. For example, a user can attach one or more routing posts 134 within the blender system 100 during manufacturing as slack, or excess, wire arises. A user can attach one or more routing posts 134 within the blender system 100 during installation and/or assembly of the blender system 100 so that one or more wires can be moved out of the way for a particular part to be installed. Such one or more routing posts 134 can be removed after the particular part is installed. In various instances, the one or more routing posts 134 can be slidably coupled to the blender system 100 such that, as one or more wires are desirably routed during assembly, the one or more routing posts 134 can be slid into a particular position to pin, secure, or otherwise maintain, the one or more wires in the desired position. This may be particularly useful in allowing a user to use the same wires for different models during manufacturing, thereby reducing the need for multiple lengths of the same wire, which increases manufacturing costs. The one or more routing posts 134 can be attached to the blender system 100 in any suitable manner including, for example, through the use of an adhesive or the like. In other instances, the one or more routing posts 134 are attached to the blender system 100 by at least a portion of each of the one or more routing posts 134 being received in an aperture defined in the motor housing 132 and/or wall, such as the housing walls 124 of the base housing 122, for example. The one or more routing posts 134 can be press-fit, or interference fit, into the aperture(s), the one or more routing posts 134 can be threadably coupled to the aperture, and/or the one or more routing posts 134 can be secured using any other suitable coupling mechanism. Further, while FIGS. 3 and 4 depict two routing posts 134 disposed around a circumference of the motor housing 132, such a configuration is not limited by the present disclosure and other configurations are contemplated and included within the scope of the present disclosure.

In some embodiments, the one or more routing posts 134 may be formed of the same material as the motor housing 132 (e.g., plastic). In other embodiments, the one or more routing posts 134 may be formed of another material, such as, for example, a metal, a composite, a resin, or a combination or mixture of any of the foregoing.

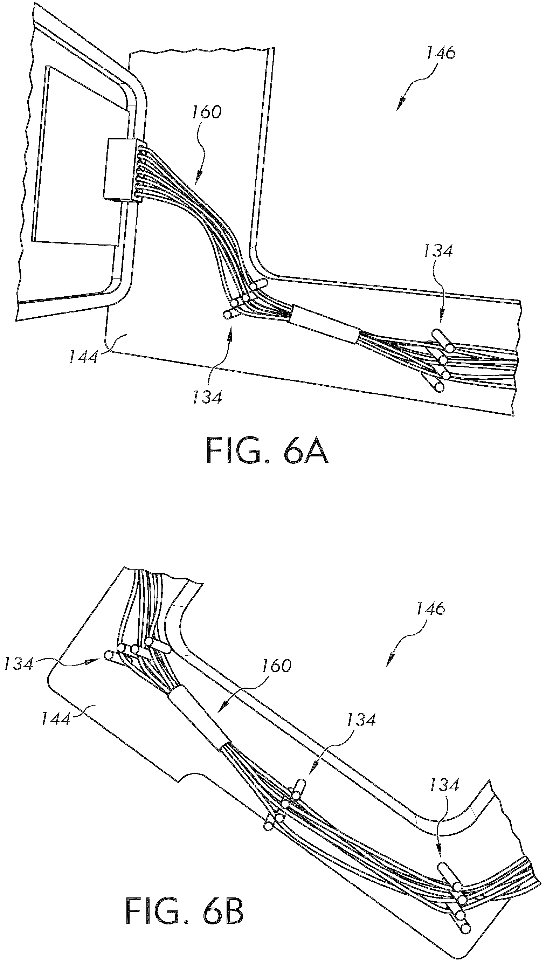

FIGS. 6A-6C depict other examples of the one or more routing posts 134 in other locations within the blender base 120. Specifically, the routing posts 134 depicted in FIGS. 6A-6C extend from the inner surface 144 of the top plate 140 in a row or array spaced a particular distance apart from one another such that one or more wires, such as a single wire, can be disposed within the space defined between adjacent routing posts 134. More specifically, a cluster of seven individual wires 160 extend between particular components within the blender base 120. A plurality of routing posts 134 extend from the inner surface 144 of the top plate 140. The plurality of routing posts 134 are spaced apart from one another such that a single wire can be secured within a space defined between a first routing post and a second routing post. The plurality of routing posts 134 extend from the inner surface 144 to a distance that allows for more than one wire to be secured within the space defined between the first routing post and the second routing post in a stacked manner. Stated another way, a first wire can be vertically stacked upon a second wire within the space defined between adjacent routing posts. It is noted that the routing posts 134 may be disposed in a general straight line or may be offset with respect to each other such that a single line cannot pass through each of the routing posts 134. Such an arrangement may allow wires 160 to be placed in a sinusoidal path through the spaces defined by the routing posts 134.

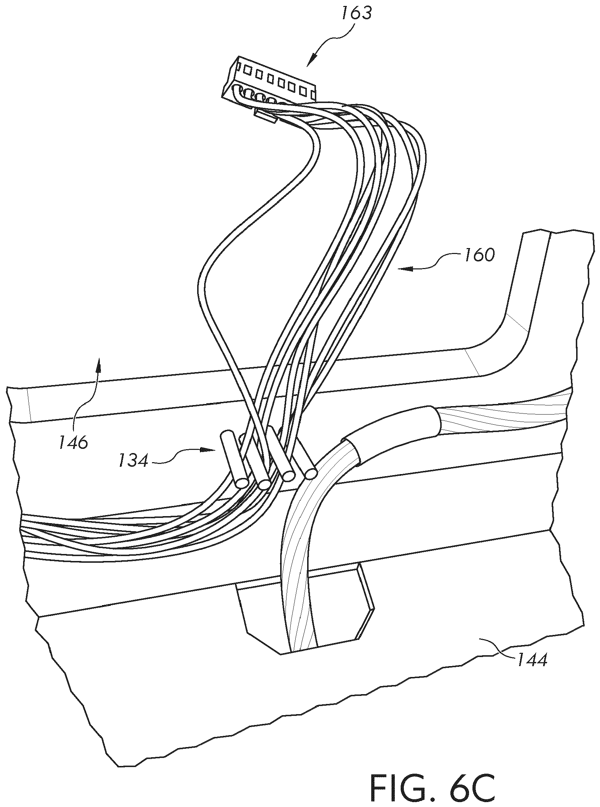

In an aspect, the space defined between adjacent routing posts 134 may be sized such that wires 160 passing, or otherwise extending, through the space are held in place via friction or a gentle clamping force applied by adjacent routing posts 134. Such an arrangement may provide shielding between adjacent wires (e.g., electromagnetic and/or heat shielding), ensure adjacent wires do not get tangled with each other and/or become pinched in a manner that prevents electricity and/or data signals to be passed through the wires, and/or the like. Further, the routing posts 134 may be positioned on the top plate 140 in such a manner so that the routing posts 134 restrain the wires from being passed through the aperture 146 defined by the top plate 140 except in specific locations (e.g., as shown in FIG. 6C where the connector 163 of the wires 160 extends through the aperture 146 in a particular location because of the placement and arrangement of the routing posts 134).

A distance that the routing posts 134 extend from a surface of the blender system 100, such as the inner surface 144 of the top plate 140, is not limited by this disclosure, and may be any distance. In various instances, the routing posts 134 may extend a distance that allows the top plate 140 to be attached to other components of the blender base 120 (e.g., to the housing walls 124 of the base housing 122) such that the routing posts 134 contact adjacent components (e.g., the motor housing 132). In such instances, the routing posts 134 can be used to ensure appropriate spacing between the inner surface 144 of the top plate 140 and the adjacent components (e.g., the motor housing 132) and/or so that the wires 160 passing between the routing posts 134 are maintained in position and prevented from accidentally slipping out during assembly or operation of the blender system 100. More specifically, in instances where the routing posts 134 extend a distance such that a first end, or the end the furthest from the surface from which the routing post extends from, of each routing post 134 contacts an adjacent component of the blender base 120 as the adjacent component is attached, or otherwise installed, to the component from which the one or more routing posts 134 extend. Such contact forms a seal such that the one or more wires guided by the one or more routing posts 134 are prevented from moving, or are otherwise maintained in position. Stated another way, the one or more wires cannot bypass the seal formed as a result of the contact between the first end of the routing post and the adjacent component. The presence of the seal is important in situations where the one or more wires are susceptible to becoming displaced, such as situations where the motor within the blender base 120 is being operated and producing vibrations and/or situations where the blender base 120 is dropped and/or tipped over, for example.

While FIGS. 6A-6C generally depict routing posts 134 in groups or arrays of 4 posts, it is noted that any suitable number of posts may be utilized in a group. For example, groups may include two posts, three posts, five posts, etc. In examples, the routing posts 134 may be positioned in groups about top plate 140 such that the wires 134 are routed proximal the inner surface 144, and do not pass through or under the aperture 146. Passing wires through the routing posts 134 may allow for improved assembly, reduced vibration of wires during blending (e.g., reduced noise), or the like. Moreover, as described herein, routing posts 134 may include various shapes, such as, for example, a "U" shape, a "C" shape, an "O" shape, a cylindrical shape, or the like.

While not depicted in the figures of the present disclosure, in some embodiments, the routing posts 134 may include other features, or identifiers, that facilitate placement of the wires 160 therebetween, such as indicia, color coding, or the like. In various instances, the identifiers can serve to indicate an identity of a particular wire to be routed thereby. In various instances, such an identity of the wire can include, for example, a type of wire, a brand of wire, a thickness of wire, a color of wire, and/or the like. More specifically, a first routing post may be red to indicate a red wire is to extend through, or otherwise be secured within, a space defined by the first routing post, whereas a second routing post may be blue to indicate a blue wire is to extend through, or otherwise be secured within, a space defined by the second routing post. Stated another way, the routing posts 134 can be used as a visual guide to a user during manufacturing and/or assembly.

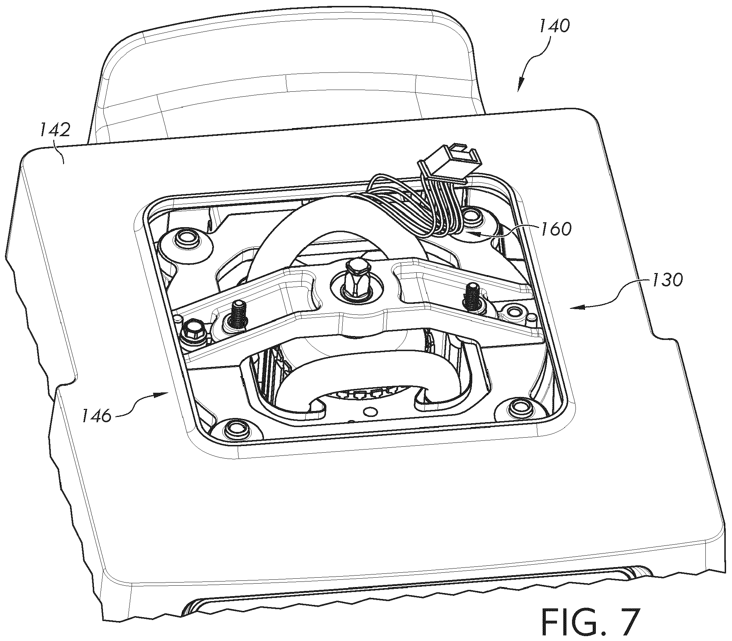

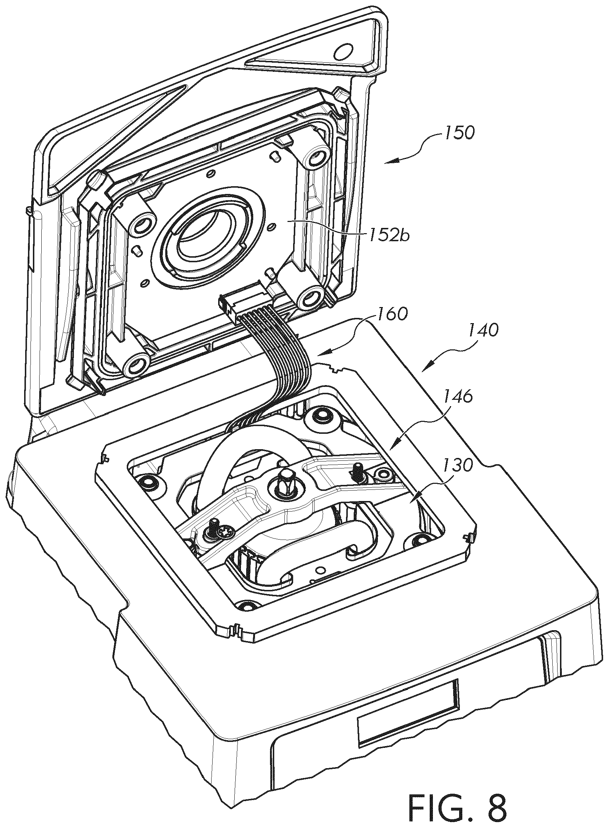

Turning now to FIGS. 7 and 8, when the wires 160 are appropriately routed via the routing posts 134 as described herein and the top plate 140 is placed on, or otherwise assembled to, the other components of the blender base 120, excess wire is restrained, or otherwise secured, out of the way within the blender base 120. Notably, some portions of the wire 160 still remain to be coupled and extend through the aperture 146 defined in the top plate 140 to an adjacent components such as to a second control board 152b held within the board housing 150, for example. Such board housing 150 is supported on top of the top plate 140, on a surface opposite where the other excess wire is restrained, for example.

In some embodiments, the present disclosure relates to a method of assembling the blender system 100 as shown and described herein. The method includes at least routing one or more wires through the one or more routing posts between a first component and a second component. In various instances, the method includes selectively coupling the one or more routing posts to a surface of the blender system 100. In such instances, the one or more routing posts can remain coupled to the surface of the blender system 100 after completion of a particular assembly step. In other instances, the one or more routing posts are removed from the surface of the blender system 100 after completion of the particular assembly step. In various instances, selectively coupling the one or more routing posts to the surface of the blender system 100 includes coupling the one or more routing posts to the surface of the blender system such that a first end of at least one of the one or more routing posts contacts an adjacent surface of a component assembled to, or otherwise against, the surface of the blender system 100 from which the one or more routing posts extend.

Based on the foregoing, it should now be understood that the present disclosure relates to routing posts within a blender system that particularly route and restrain wires within the blender base of the blender system so as to ensure the wires do not interfere with assembly and/or operation of components, are prevented from getting damaged, pinched, or the like, and/or protect the wires from interference. Such routing posts serve to maintain one or more wires in a desired position in situations where the one or more wires are exposed to strong vibrations, such as from an operation of the motor, and/or situations where the blender system is dropped and/or knocked off balance, for example.

### Examples

Example 1 - A blender system is disclosed having a blender base including housing walls defining an interior cavity. The blender system further includes a routing post disposed within the interior cavity of the blender base, the routing post to direct a wire along a predetermined path within the blender base.

Example 2 - The blender system of Example 1, wherein the routing post comprises a projection extending into the interior cavity of the blender base.

Example 3 - The blender system of any of Examples 1 and 2, further comprising a second routing post disposed within the interior cavity of the blender base, wherein the wire is secured in a particular position in a space defined adjacent the routing post and the second routing post.

Example 4 - The blender system of any of Examples 1-3, wherein the routing post extends from one of the housing walls into the interior cavity of the blender base.

Example 5 - The blender system of Example 4, wherein the routing post comprises a first end at a point furthest from the housing wall from which the routing post extends, and wherein the first end contacts a second one of the housing walls.

Example 6 - The blender system of any of Examples 1-5, wherein the routing post defines an annular shape, and wherein the wire extends through a center of the routing post.

Example 7 - The blender system of any of Examples 1-6, wherein the routing post is integrally formed with the blender base.

Example 8 - The blender system of any of Examples 1-7, wherein the routing post is selectively positioned on the blender base.

Example 9 - The blender system of any of Examples 1-6 and 8, wherein the routing post is removably coupled to the blender base.

Example 10 - The blender system of any of Examples 1-9, further comprising a motor housing positioned within the interior cavity of the blender base.

Example 11 - The blender system of Example 10, wherein the routing post extends from a surface of the motor housing into the interior cavity of the blender base.

Example 12 - The blender system of any of Examples 10 and 11, further comprising a motor positioned within the motor housing, the motor producing a vibration during use, wherein the routing post prevents the wire from moving out of the predetermined path based at least in part on the vibration from the motor.

Example 13 - The blending system of any of Examples 1-12, wherein the routing post comprises an identifier to indicate an identity of the wire to be directed thereby.

Example 14 - The blending system of Example 13, wherein the identifier comprises a color.

Example 15 - The blending system of any of Examples 13 and 14, wherein the identity of the wire comprises a type of wire.

Example 16 - A blender system is disclosed. The blender system includes a blender base including housing walls, wherein the housing walls define an interior cavity. The blender system further includes a motor housing, a motor positioned within the motor housing, wherein the motor produces a vibration during use, and a routing post extending from the motor housing into the interior cavity of the blender base. The routing post is to direct a wire along a predetermined path within the blender base, wherein the routing post prevents the wire from moving out of the predetermined path.

Example 17 - The blender system of Example 16, wherein the routing post prevents the wire from moving out of the predetermined path based at least in part on the vibration from the motor.

Example 18 - The blender system of any of Examples 16 and 17, wherein the routing post comprises a first end at a point furthest away from the motor housing, and wherein the first end of the routing post contacts a surface of a housing wall.

Example 19 - A blender system is disclosed. The blender system includes a blender base comprising housing walls, wherein the housing walls define an interior cavity, a motor housing, a motor positioned within the motor housing, wherein the motor produces a vibration during use, and a routing post extending from one of the housing walls into the interior cavity of the blender base. The routing post is to direct a wire along a predetermined path within the blender base, wherein the routing post prevents the wire from moving out of the predetermined path.

Example 20 - The blender system of Example 19, wherein the routing post comprises a first end at a point furthest away from the housing wall from which the routing post extends, and wherein the first end of the routing post contacts the motor housing.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular aspects have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A blender system, comprising.
a blender base comprising housing walls, wherein the housing walls define an interior cavity; and
a routing post disposed within the interior cavity of the blender base, the routing post to direct a wire along a predetermined path within the blender base.

2. The blender system of claim 1, wherein the routing post comprises a projection extending into the interior cavity of the blender base.

3. The blender system of any of claims 1 and 2, further comprising a second routing post disposed within the interior cavity of the blender base, wherein the wire is secured in a particular position in a space defined adjacent the routing post and the second routing post.

4. The blender system of any of claims 1-3, wherein the routing post extends from one of the housing walls into the interior cavity of the blender base.

5. The blender system of claim 4, wherein the routing post comprises a first end at a point furthest from the housing wall from which the routing post extends, and wherein the first end contacts a second one of the housing walls.

6. The blender system of any of claims 1-5, wherein the routing post defines an annular shape, and wherein the wire extends through a center of the routing post.

7. The blender system of any of claims 1-6, wherein the routing post is integrally formed with the blender base.

8. The blender system of any of claims 1-7, wherein the routing post is selectively positioned on the blender base.

9. The blender system of any of claims 1-6 and 8, wherein the routing post is removably coupled to the blender base.

10. The blender system of any of claims 1-9, further comprising a motor housing positioned within the interior cavity of the blender base.

11. The blender system of claim 10, wherein the routing post extends from a surface of the motor housing into the interior cavity of the blender base.

12. The blender system of any of claims 10 and 11, further comprising a motor positioned within the motor housing, the motor producing a vibration during use, wherein the routing post prevents the wire from moving out of the predetermined path based at least in part on the vibration from the motor.

13. The blending system of any of claims 1-12, wherein the routing post comprises an identifier to indicate an identity of the wire to be directed thereby.

14. The blending system of claim 13, wherein the identifier comprises a color.

15. The blending system of any of claims 13 and 14, wherein the identity of the wire comprises a type of wire.
